# EUROPEAN PATENT SPECIFICATION

(11) **EP 3 722 992 B1**
(45) Date of publication and mention of the grant of the patent: **01.03.2023**
(21) Application number: 19168473.7
(22) Date of filing: 10.04.2019
(51) Int. Cl.: G06V 10/40, G06V 20/56, G06V 20/58

(54) **SYSTEM AND METHOD FOR PRE-PROCESSING IMAGES CAPTURED BY A VEHICLE**
SYSTEM UND VERFAHREN ZUR VORVERARBEITUNG VON EINEM FAHRZEUG ERFASSTEN BILDERN
SYSTÈME ET PROCÉDÉ DE PRÉTRAITEMENT D'IMAGES CAPTURÉES PAR UN VÉHICULE

(43) Date of publication of application: 14.10.2020
(73) Proprietor: Teraki GmbH, 10785 Berlin (DE)
(72) Inventor: VEITH, Johannes, 10785 Berlin (DE); RICHART, Daniel Lampert, 10785 Berlin (DE); KOPF, Markus, 10785 Berlin (DE)
(74) Representative: Grünecker Patent- und Rechtsanwälte PartG mbB

(56) References cited:
- EP-A1- 2 039 166
- EP-A1- 3 012 777
- WO-A1-2009/097449
- US-A1- 2016 086 050
- US-A1- 2016 283 804
- US-A1- 2017 248 963
- US-A1- 2019 043 327
- US-A1- 2019 096 244
- SANGHOON LEE ET AL: "Fast algorithms for foveated video processing", IEEE TRANSACTIONS ON CIRCUITS AND SYSTEMS FOR VIDEO TECHNOLOGY, vol. 13, no. 2, 1 February 2003 (2003-02-01), pages 149-162, XP055564945, US ISSN: 1051-8215, DOI: 10.1109/TCSVT.2002.808441
- ZHOU WANG ET AL: "Foveation Scalable Video CodingWith Automatic Fixation Selection", IEEE TRANSACTIONS ON IMAGE PROCESSING, IEE SERVICE CENTER , PISCATAWAY , NJ, US, vol. 12, no. 2, 1 February 2003 (2003-02-01), XP011074367, ISSN: 1057-7149

## Description

### BACKGROUND

The present invention relates to systems and methods for pre-processing images. In particular, image processing that is performed on images that are recorded by a camera of a vehicle. With the rise of remote and autonomic driving, the amount of image data which is streamed is ever increasing. In many cases, recording images by cameras which are integrated into vehicles (or which can be removably attached to vehicles) is indispensable. Also, high resolution cameras with 1080p and 4k resolution that produce large amounts of image data are commonly used. However, data transmission is limited by available bandwidth and high data rates can lead to transmission latencies. This can render applications impossible, which rely on near or real-time image transmission. To allow image streaming, one typically is driven to use image compression. Usually, the recorded images are encoded by an encoder prior to storing and/or transmitting the images. There are many encoders known in the state of the art, which allow controlling overall compression of the image. However, just having control over the overall compression may be non-optimal. In many image streaming applications, and in particular in case of recording images by a camera of a vehicle (for example, as generated by remotely controlled or autonomously driving cars), some regions of an image may be more important than other regions. State of the art encoders lack the capability to control compression based on individual regions of the image. In addition, the loss of image quality by overall compression is not only perceptually undesirable but compression artifacts may also interfere with image analysis algorithms such as classification and/or neural networks that may be performed on the image later on. Another problem which is halting progress in the field of image compression is compatibility: while it may be possible to modify an encoder to include local compression within the encoding process, also the decoder needs to be modified to decode the image accordingly. Control over the decoder, however, is often out of the scope of an image processing application.

It is therefore the object of the present invention to provide an improved image processing method. This object is solved by the subject matter of the independent claims. Preferred embodiments are defined by the dependent claims.

US 2016/283804 A1 discloses that a vehicle receives one or more images of an environment of the vehicle. The vehicle also receives a map of the environment. The vehicle also matches at least one feature in the one or more images with corresponding one or more features in the map. The vehicle also identifies a given area in the one or more images that corresponds to a portion of the map that is within a threshold distance to the one or more features. The vehicle also compresses the one or more images to include a lower amount of details in areas of the one or more images other than the given area. The vehicle also provides the compressed images to a remote system, and responsively receives operation instructions from the remote system.

EP 3 012 777 A1 provides a method, a device and a system for modifying at least one parameter used by a video processing algorithm, such as a motion detection algorithm, an object detection algorithm, or an object tracking algorithm, for monitoring of a scene. The method comprises: receiving a first and a second video sequence of the scene, wherein the first video sequence is captured using a thermal camera such that the first video sequence comprises thermal information being indicative of temperatures in the scene, and applying the video processing algorithm to the second video sequence, wherein at least one parameter used by the video processing algorithm is modified based on the thermal information comprised in the first video sequence.

WO 2009/097449 A1 discloses a system and method for an omnidirectional camera for use in recording events around a police vehicle is disclosed. The system and method include an omnidirectional camera and a digital processor for processing the omnidirectional images captured by the omnidirectional camera. The digital processor is operable to locate one or more regions of interests disposed within the omnidirectional images.

US 2017/248963 A1 relates to autonomous vehicles to provide map data for autonomous vehicles. In particular, a method includes accessing subsets of multiple types of sensor data, aligning subsets of sensor data relative to a global coordinate system based on the multiple types of sensor data to form aligned sensor data, and generating datasets of three-dimensional map data. The method further includes detecting a change in data relative to at least two datasets of the three-dimensional map data and applying the change in data to form updated three-dimensional map data. The change in data may be representative of a state change of an environment at which the sensor data is sensed. The state change of the environment is related to the presence or absences of an object located therein.

US 2016/086050 A1 discloses an apparatus and methods for detecting and utilizing saliency in digital images. Salient objects are detected based on analysis of pixel characteristics. Least frequently occurring pixel values are deemed as salient. Pixel values in an image are compared to a reference. Color distance is determined based on a difference between reference color and pixel color. Individual image channels are scaled when determining saliency in a multi-channel image. Areas of high saliency are analyzed to determine object position, shape, and/or color. Multiple saliency maps are additively or multiplicative combined in order to improve detection performance (e.g., reduce number of false positives).

US 2019/043327 A1 provides systems and methods for a camera system. A method includes receiving, from a first camera in a vehicle, view data corresponding to an area from a vantage point of the vehicle. The method further includes detecting a region of interest from the view data provided by the first camera. The method also includes providing the region of interest to a second camera in the vehicle. The method further includes receiving, from the second camera, zoom view data corresponding to a zoom view of the region of interest.

US 2019/096244 A1 describes methods and apparatus for vehicle-to-vehicle communication. A data request from a remote vehicle for data not available to the remote vehicle is received. Visual data from a host vehicle responsive to the data request that includes the data not available to the remote vehicle is determined. The visual data is analyzed for objects to create metadata associated with the visual data. The visual data and the metadata are provided to the remote vehicle in response to the data request.

Sanghoon Lee ET Al: "Fast algorithms for foveated video processing", IEEE Transactions on Circuits and Systems for Video Technology, vol 13, no. 2, 1 February 2003, pages 149-162 discusses the problem of communicationg high-quality, foveated video streams in real time. Foveated video streams possess specific data density properties that can be exploited to enhance the efficiency of subsequent video processing. These properties are exploited to construct several efficient foveated video processing algorithms. Further examples of the relevant prior art are: EP2039166 A1 and ZHOU WANG ET AL: "Foveation Scalable Video Coding With Automatic Fixation Selection", IEEE TRANSACTIONS ON IMAGE PROCESSING, IEE SERVICE CENTER , PISCATAWAY , NJ, US, vol. 12, no. 2, February 2003, XP011074367.

It is therefore the object of the present invention to provide an improved method for encoding an image that has a region of interest.

This object is solved by the subject matter of the independent claims.

Preferred embodiments are defined by the dependent claims.

### SUMMARY

A method, system and computer-readable medium described herein provide one or more images with reduced information content. In particular, the one or more images are filtered to generate a filtered image with reduced information content before said filtered image is encoded. This may lead to a decrease in computational steps performed by an encoder when encoding the filtered image as well as to a decrease in the file size of the encoded image that needs to be stored and/or transmitted.

The invention is defined by the independent claims. Dependent claims concern optional features of some embodiments of the invention.

The embodiments of the invention can be combined with each other. The embodiments of the invention are also implemented on a computer-readable medium comprising computer-readable instructions, that, when executed by a processor, cause the processor to perform the above described steps.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF SUMMARY OF THE FIGURES

These and further aspects and features of the present invention will be described by the following detailed description of the embodiments of the invention under reference to the accompanying drawings, wherein
Fig. 1 is a diagram illustrating system comprising a vehicle, a corresponding camera, another vehicle and a cloud environment;
Fig. 2 illustrates an exemplary image that may be captured by a camera of a vehicle, the image comprising an exemplary scene including a traffic sign, a pedestrian, a street, a vehicle, a cyclist, trees and sky;
Fig. 3A illustrates an exemplary region of interest on the image that is determined using object recognition and a region on the image that is not the region of interest;
Fig. 3B illustrates an exemplary region of interest on the image that is determined using additional distance values for the image and a region on the image that is not the region of interest;
Fig. 4A illustrates an exemplary importance matrix which can be used to assign importance values to an image in order to define one or more regions of interest;
Fig. 4B illustrates the exemplary importance matrix of Fig. 4A where an importance value is assigned to each single pixel of the image;
Fig. 4C illustrates the exemplary importance matrix of Fig. 4A where an importance value is assigned to blocks of pixels of the image;
Fig. 5 illustrates an exemplary image, an exemplary corresponding importance matrix, and a corresponding filtered image;
Fig. 6 illustrates an exemplary sequence of subsequently captured images; and
Fig. 7 is a flow diagram illustrating a method for processing an image.

### DETAILED DESCRIPTION

Reference will now be made in detail to the exemplary embodiments, examples of which are illustrated in the accompanying drawings, therein like reference numerals reference to like elements throughout.

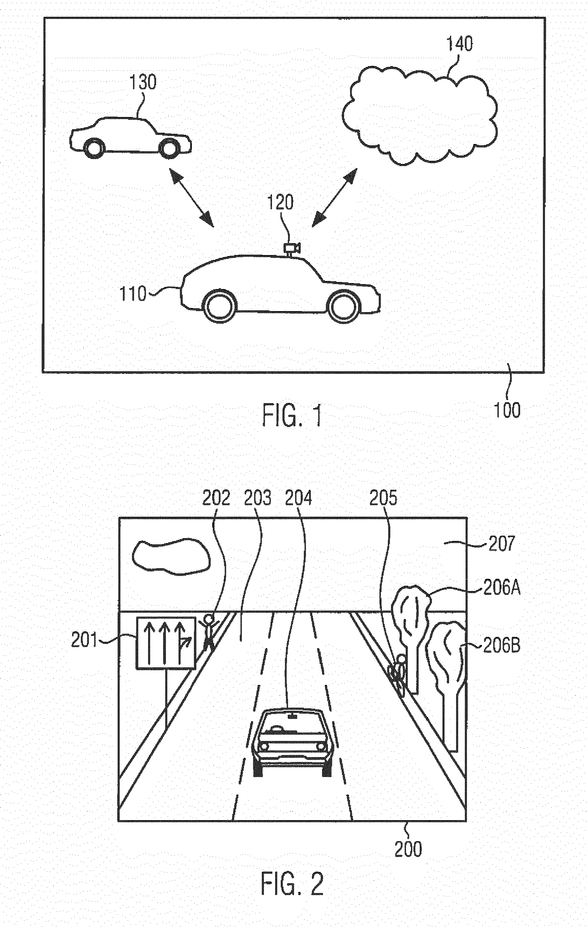

Fig. 1 illustrates a system 100 including a vehicle 110, a camera 120 of the vehicle 110, another vehicle 130, and a cloud environment 140. The vehicle 110 comprises a processor configured to receive an image and to process the image by filtering the image before encoding the image. This image is an image that is recorded by the camera 120 of the vehicle 110. The vehicle 110 may further comprise a memory for saving the encoded image. In addition, the vehicle 110 may further comprise an autonomous driving system that may be communicatively coupled to the processor of the vehicle and that may receive the encoded image. The autonomous driving system may use the encoded image for autonomously driving the vehicle 110. The vehicle 110 may comprise one or more sensors, such as a distance sensor and a temperature sensor. The vehicle 110 may be further communicatively coupled to another vehicle 130 and/or a cloud environment 140. The camera 120 may be integrated anywhere in the vehicle 110 (e.g., next to a headlight, a rearview mirror, etc) or may be a camera that can be attached and removed from the vehicle 110 (such as a dashcam). The other vehicle 130 may also comprise a camera for recording images, a processor, a memory, and/or an autonomous driving system. Likewise, the processor of the other vehicle 130 may also be configured to process an image by filtering the image before encoding the image, as described herein. The cloud environment 140 may include a cloud storage for storing the encoded image. The cloud environment 140, may be communicatively coupled to a remote driving system that may be used to control the vehicle 110 from remote by a remote driver.

Fig. 2 illustrates an exemplary image 200 that may be filtered and encoded according to various embodiments described herein. The image 200 may be recorded by the camera 120 of vehicle 110. The image 200 comprises an exemplary scene that may be recorded by a camera 120 of a vehicle 110. The image 200 may include a plurality of pixels that may form one or more regions on the image. The one or more regions (of pixels) on the image may display one or more objects. The exemplary image 200 of Fig. 2 illustrates several regions 201 - 207 of pixels that display several objects including a traffic sign 201, a pedestrian 202, a street 203, a car 204, a cyclist 205, two trees 206A, 206B and sky 207. It is apparent that it may be possible to define more regions displaying further objects such as cyclist way, lane marker, or cloud which are also present in image 200. It is further apparent that in other examples other regions of the image may display other objects. As discussed above and as further detailed below, it may be computationally expensive to encode the image 200 directly without pre-processing. Similarly, the encoded image may have a large file size when the image 200 is not pre-processed. To solve these problems, the image 200 may be filtered (e.g., by the processor of the vehicle 110) before the image is encoded. The filtering may reduce the information content of pixels that display objects that are of less interest for a particular application. For example, in a remote and or/autonomous driving application one may be interested in other vehicles, traffic signs, pedestrians and cyclists, but not in trees. In this example, regions on the image that display trees may be filtered (e.g., by blurring or by removing high frequencies). Filtering out trees may already lead to a significant reduction in processing needed by the encoder to encode the image, as trees may have a high level of detail which is computationally expensive to encode. Similarly, the file size of the encoded image may be reduced when regions of the image are filtered (e.g., blurred) before the image is encoded.

In the following, various examples are described that can be used to determine a region of interest on an image (e.g., image 200). As further described below, multiple regions of interest can be generated according to any of the following examples and it is possible to combine these multiple regions of interest (that may be obtained via different examples).

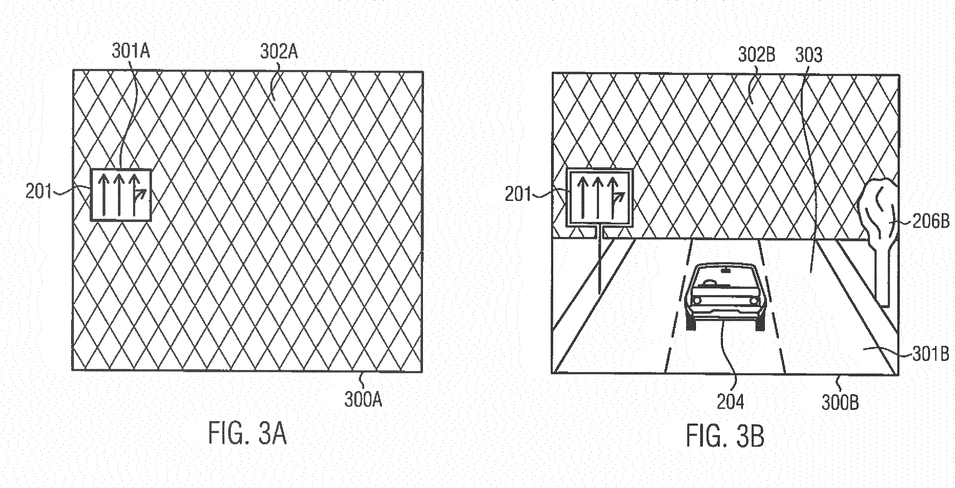

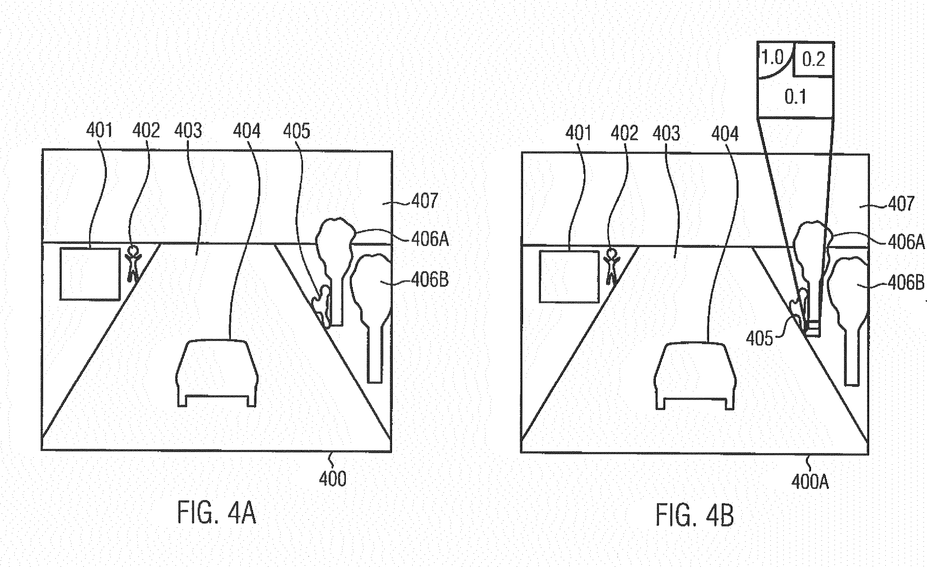

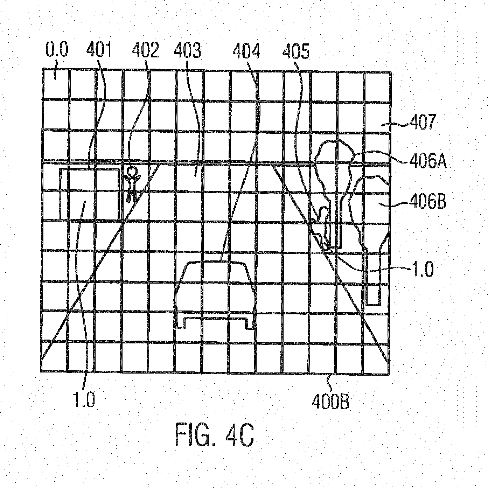

According to one example object recognition may be used (e.g., by the processor of the vehicle 110) to recognize one or more objects on the image (e.g., image 200). In this example, the region (e.g., the pixels) on the image that displays the recognized object may be determined to be the region of interest. Object recognition on an image is well known in the state of the art and is not described in further detail herein. In particular, object recognition can be used to recognize various object categories, such as traffic signs, streets, pedestrians, cyclists, trees, sky, to name only a few examples. For each of these object categories, an object recognizer may find none or one or more object. In the particular example displayed in Fig. 3A an object recognizer is used to recognize traffic signs on the exemplary image 200 of Fig. 2. In this example, the object recognizer recognizes traffic sign 201 on the image 200 and the region of the image (e.g., the pixels of the image) displaying the traffic sign 201 (i.e., the recognized object) may be determined to be the region of interest 301A (e.g., as one is only interested in traffic signs). In this example, the remainder of image 200 is not a region of interest 302A. In this example, the region (i.e., the pixels) on the image that are not (i.e., that are outside) the region of interest 302A can be filtered (e.g., blurred) prior to encoding the image. In this particular example of Fig. 3A only one object category is recognized (i.e., traffic sign) and the object category only includes one object (i.e., traffic sign 201). However, as further detailed below with reference to Fig. 4, it is also possible that multiple object categories can be recognized (e.g., traffic signs and vehicles) and that an object category may have multiple objects (e.g., the category vehicles may include two vehicle objects).

According to one example one or more distance values may be used to determine the region of interest. In this example, the vehicle 110 may include a distance sensor. In one example, the camera 120 may be a 3D camera including the distance sensor. In another example, the vehicle comprises the distance sensor for sensing the distance values in addition to the camera 120 (e.g., a lidar or radar sensor). The distance sensor may measure a distance value for the same scene that is displayed on the image so that for each pixel (or group of pixels - depending on the resolution of the distance sensor) on the image a corresponding distance value is obtained. In other words, for each pixel (or group of pixels) on the image (e.g., image 200) a distance value is obtained by the distance sensor. The region of interest can then be determined based on these distance values (that correspond to the pixels on the image). For example, a threshold distance can be defined (such as 10 meters) and all pixels with a corresponding distance value of less than the threshold distance may be determined to be a region of interest and all pixels with a corresponding distance of more than the threshold distance may be determined to be not a region of interest (e.g., in an example where only "close" objects, i.e., objects that are closer than 10 meters, are of interest). The region (i.e., the pixels) on the image that is not the region of interest may then be filtered (in order to reduce the information content of the image) before the image is encoded. It becomes apparent that also other threshold distances can be used and that also multiple threshold distances can be used (e.g., pixels with distance values between 10 and 20 meters). In some examples, the one or more threshold distance may be a pre-defined, static value (e.g., 10 meters) in other examples, the one or more threshold distances can be dynamic, i.e., the threshold distance can depend on other information, such as the speed of the vehicle 110. In this case, the threshold distance may increase when the speed of the vehicle 110 increases and the threshold distance may decrease when the speed of the vehicle is decreasing. One of these examples is illustrated in Fig. 3B where all pixels with a distance value that is smaller than a threshold distance are determined to be the region of interest 301B and all pixels with a distance value that is larger than the threshold distance are determined to be not the region of interest 302B (i.e., are outside the region of interest).

In the depicted example of Fig. 3B the pixels of image 200 that display traffic sign 201, car 204, tree 206B and parts of the street 303 of image 200 are included in the region of interest (i.e., these regions of the image have distance values that are smaller than the threshold distance), while the pixels of image 200 that display pedestrian 202, the remainder of street 203, cyclists 205, tree 206A and sky 207 are not in (i.e., outside) the region of interest (i.e., these regions of the image have distance values that are larger than the threshold distance).

In some scenarios, one may determine the region of interest as pixels that have a corresponding distance value that is farer away than the threshold value (instead of or in addition to pixels that have a corresponding distance value that is closer than the threshold value as discussed above). Determining the region of interest as being pixels on the image with a corresponding distance value that is farer away than the threshold distance value may be especially beneficial because a region of interest that is far away may typically occupy a smaller area on the image as compared to a region of interest that is close. Consequently, the number of regions (or objects) of interest per image area can be higher when the regions of interest are far away. In addition, a region of interest at far distance typically includes high frequency and/or high entropy areas (of pixels). In these areas, filtering on the one hand side may aid compression more than on an image area with regular content, while on the other side, filtering can render an object unrecognizable. For this reason, it may make sense to determine distant objects to be the region of interest, in case it is desirable to further process (e.g., recognize) the distant object after compression. For example, if the aim is to recognize a car after compression, it may make sense to assign a higher importance to distant cars than to nearby cars

While the foregoing example with regard to determining the region of interest based on distance values has been discussed with reference to a distance sensor that may be included in the vehicle (for measuring the distance values), it may also be possible to compute the distance values from the image (e.g., the image 200 which may be captured by camera 120 of the vehicle 110). For example, the distance values for the pixels on the image could be computed from stereo imaging (i.e., taking two images of the same scene from different angles). Likewise, the distance values for the pixels on the image could also be computed from the image alone (i.e., without stereo imaging or a distance sensor), for example, by using a neural network that is trained to determine distance values for regions (pixels) on an image (such as image 200). Using a trained neural network to detect a region of interest (e.g., a region of interest based on distance values determined by the neural network) is further discussed below.

According to another example, one or more temperature values may be used to determine the region of interest. In this example, the vehicle 110 may include a temperature sensor. In one example, the camera 120 may include an infrared sensor that can measure the temperature. In another example, the vehicle comprises the temperature sensor for sensing the temperature values in addition to the camera 120 (e.g., a thermal imaging device such as FLIR). The temperature sensor may measure a temperature value for the same scene that is displayed on the image so that for each pixel (or group of pixels - depending on the resolution of the temperature sensor) on the image a corresponding temperature value is obtained. In other words, for each pixel (or group of pixels) on the image (e.g., image 200) a temperature value is obtained by the temperature sensor. The region of interest can then be determined based on these temperature values (that correspond to the pixels on the image). For example, a threshold temperature can be defined (such as 30 degrees Celsius) and all pixels with a corresponding temperature value of more than the threshold temperature may be determined to be a region of interest and all pixels with a corresponding temperature of less than the threshold temperature may be determined to be not a region of interest (e.g., in an example where only "warm" objects, i.e., objects that are warmer than 30 degrees Celsius, are of interest). The region on the image that is outside (i.e., not in) the region of interest may then be filtered (e.g., blurred) before the image is encoded in order to reduce the information content of the image before encoding the image. It becomes apparent that also other threshold temperatures can be used and that also multiple threshold temperatures can be used (e.g., pixels with temperature values between 25 and 40 degrees Celsius). This is particularly useful for detecting humans and/or animals, which may be an important task when driving a vehicle (e.g., vehicle 110).

According to yet another example, a gaze location of a user (e.g., the driver of vehicle 110) may be used to determine the region of interest. In one example, the gaze location of the driver who is located in the vehicle 110 may be determined (e.g., via an eye tracker) and may be used to determine the region of interest. In another example, the gaze location of a remote driver who is driving the car but not physically present in the car may be determined and used to determine the region of interest. The remote driver may image from the vehicle 110 via cloud environment 140. In this case, the gaze location (i.e., the gaze location on the received image) of the remote driver may be communicated back to the vehicle via the cloud environment. The gaze location (either of the driver located in the vehicle or of the remote driver) may then be mapped to a region (i.e., pixels) on the image (e.g., image 200) that is to be filtered. The region (i.e., the pixels) on the image that corresponds to the gaze location can then be defined to be the region of interest. Of course, one may also define a (larger) region that is determined based on the gaze location (e.g., a circle with a particular radius centered at the region of the image that corresponds to the gaze location, or a square with a particular side length centered at the region of the image that corresponds to the gaze location). The remaining region of the image (i.e., the pixels outside the region of interest) may then be determined to be not the region of interest, which can then be filtered before encoding the image.

According to yet another example, a future trajectory of the vehicle (e.g., vehicle 110) may be used to determine the region of interest. In this example, the speed of the vehicle, the position of the steering wheel of the vehicle and/or information from the navigation system of the vehicle (e.g., about the route of the vehicle) may be used to determine the future trajectory of the vehicle. In this example, the region (i.e., pixels) on the image may be determined that correspond to the future trajectory of the vehicle. This region may then be the region of interest and the remaining regions (i.e., pixels) on the image may then be not the region of interest. This example may be useful when the vehicle is changing its direction. Such a change of direction could be detected via the position of the steering wheel or the information from the navigation system. The region of interest could then be the region on the image where the vehicle is steering towards.

The above described examples of determining a region of interest can also be combined (e.g., via logic operators, such as OR and AND) to determine one or more combined regions of interest that can then be used for filtering (i.e., by filtering the regions on the image that are outside the one or more combined regions of interest). For example, one may be interested in cars (i.e., pixels of the image which were recognized to display cars) and warm regions of the image (i.e., pixels of the image for which the temperature sensor detected a warm temperature, e.g., between 25 and 40 degrees Celsius). In this case, one could determine all cars and all warm objects to be the regions of interest on the image. In another example, one may be interested in close cyclists (i.e., pixels of the image which both were recognized to display cyclists, and for which the distance sensor detected that they are closer than some distance threshold). Of course, many other examples are possible.

In the following, the concept of the importance matrix is explained which is used to define the region of interest(s) in accordance with the above described examples. In particular, the importance matrix may have the same size as the image (e.g., image 200), i.e., the same width and height as the image. The importance matrix includes importance values and each importance value may corresponds to a pixel of the image (e.g., image 200). This means that there may be a one-to-one correspondence between regions (i.e., pixels) of the image and respective regions (i.e., importance values) of the importance matrix. In the above-described examples, the importance value of the importance matrix can be either 1 (e.g., for pixels of the region of interest on the image) or 0 (e.g., for pixels of that are outside the region of interest). Returning back to Fig. 3A, an importance matrix 300A in Fig. 3A may have the same size as image 200 (i.e., there may be as many importance values in the importance matrix 300A as there are pixels in the image 200) having importance values that may be 1 at the region of interest 301A and having importance values that may be 0 at the region 302A (i.e., for the pixels that are outside the region of interest 201A) that is not the region of interest. Similarly, when referring back to Fig. 3B, an importance matrix 300B may have the same size as image 200 having importance values 1 at region 301B and having importance values 0 at region 302B. The same can be done for the other above-discussed examples, i.e., pixels of the region of interest that being determined based on any of object recognition, distance values, temperature values, gaze location, future trajectory or any combination thereof may have an importance value 1 and the pixels outside the region of interest may have importance value 0 in the importance matrix. In other words, for any of the above discussed examples of determining a region of interest, a corresponding importance matrix may be defined having importance values 1 at a region of interest and having importance values 0 at a region that is not the region of interest. In the above discussed examples, the importance values of the importance matrix may be either 0 or 1. In other words, either a pixel on the image may be important (e.g., may be included in the region of interest) then the corresponding importance value of the importance matrix may be 1 or a pixel on the image may be not important (e.g., may be included not in the region of interest) then the corresponding importance value of the importance matrix may be 0. In some examples, however, the importance values may have not only two values (e.g., 0 and 1), but also more values may be possible. For example, the importance values may have values of 0, 0.5 and 1 or 0, 0.1, 0.2, 0.3, 0.4, 0.5 ... 0.9, 1. In general, the importance values may be any real number. In this example, the filtering of the image (that is performed before the image is encoded) may be performed in accordance with the importance values that correspond to the pixels of the image. For example, pixels having a corresponding importance value of 1 may not be filtered, pixels having a corresponding importance value of 0.5 may be moderately filtered and pixels having a corresponding importance value of zero may be strongly filtered. In other words, the degree of filtering of one or more pixels may depend on the respective one or more importance values of the one or more pixels. This may allow reducing the information content of regions (i.e., pixels) of the image that do not have an importance value of 1. The further details of how the importance value may be used for filtering are detailed below.

Having an importance matrix with importance values that are not only binary (i.e., 0 and 1) also may allow assigning different important values to different regions of interest (i.e., different from 1). For example, as discussed above with regard to Fig. 3A (where an object recognizer may be used to determine the region of interest) it is also possible that multiple object categories can be recognized (e.g., traffic signs and vehicles) on an image and that an object category may have multiple objects (e.g., the category vehicles may include two vehicle objects). In this example, it may be possible to assign different importance values to the recognized object categories. This example is illustrated in Fig. 4A displaying an importance matrix 400 for image 200 of Fig. 2 where multiple object categories are recognized. In the example displayed in Fig. 4A the object categories are traffic sign 401, pedestrian 402, street 403, car 404, cyclist 405, tree 406, sky 407. In this example the object category tree includes two objects (i.e., two trees). In this case, the importance matrix may have different importance values that correspond to regions on the image that display the different recognized object categories. One example to define the importance matrix in this case may be a look-up table where object categories may be associated with a corresponding value for the importance value. One example for such a table is shown in table 1:

**Table 1**

| Object category | Importance value (for pixels displaying an object of the object category) |
|---|---|
| Traffic sign | 1 |
| Pedestrian | 1 |
| Street | 0.6 |
| Car | 0.8 |
| Cyclist | 1 |
| Tree | 0.2 |
| Sky | 0 |

The remainder of the image 200 (i.e., all regions that are not recognized by object recognition and which are not the region of interest) may have importance value 0 or also a non-zero value (e.g., 0.1). It is worth mentioning that also the importance value 0 may be assigned to a region of interest (as in the above described example, where the region of interest "sky" is assigned the importance value 0) in case one is not interested in this particular region. It becomes apparent that regions (i.e., pixels) on the image that are determined to be regions of interest may also be filtered (i.e., in addition to the pixels that are outside the region of interest) depending on the importance value that is assigned to the region of interest. In the example discussed above, this means that, for example, the region of interest that was recognized as "traffic sign" (which may have importance value of 1) may not be filtered, but that, for example, the region of interest that was recognized as "tree" (which may have an importance value 0.2) or as "sky" (which may have an importance value 0) may be filtered (in addition to the pixels that are outside the recognized regions of interest). In other words, a region of interest that has an importance value that is smaller than 1 (i.e., that does not have the highest available importance value) may also be filtered in accordance with the importance value (as detailed below) in addition to the pixels that are outside the region of interest. Likewise, it may be possible to assign a non-zero importance value to the pixels that are outside the region of interest.

In the above example, using an importance matrix with more than two possible values for the importance values has been explained for the case of using object recognition to determine one or more regions of interest on the image. It becomes apparent, that also for the other above-discussed examples for determining the region(s) of interest and importance matrix with more than two possible values for the importance values can be used. For example, in case of determining the region of interest based on distance values, it may be possible to have an importance value of 1 for pixels that are close (e.g., having a distance value that is smaller than a first threshold distance), importance value of 0.5 for pixels that are medium distant (e.g., having a distance value that is in between the first threshold distance and a second threshold distance), and importance value of 0 for pixels that are far away (e.g., having a distance value that is larger than the second threshold distance). Similar examples are possible in case of using temperature values, gaze location, or future trajectory for determining the region of interest.

In some examples, the values in the lookup table that are used to determine the importance values of the importance matrix may be static. In other examples, the importance values in the lookup table may also be dynamic. In these examples, the importance values in the table can be dependent on other sensor data (such as data from an accelerometer, the break and/or the speed) of the vehicle 110 and may change based on the sensor data. In one example, the value for all object categories may be set to 1 (and possibly also the value for the regions that are not the region of interest) in case of a safety critical event (such as a sudden breaking event which may be determined based on an accelerometer, a position of the break and/or the speed of the vehicle).

In further examples, the importance values of the importance matrix may also be defined as a function of the region of interest. For example, in case the region of interest is determined based on distance values, the importance values could be determined as a function of the distance values. One example for this may be that all pixels with a corresponding distance value that is smaller than a threshold distance have an importance value of 1 and all pixels with a corresponding distance value that is larger than the threshold distance may have an importance value that decreases as a function of the distance value (e.g., the function could be proportional 1/distance). Similarly, in case the region of interest is determined based on gaze location, all pixels that are located around the gaze location may have an importance value of 1 and the importance values for the remaining pixels may be determined as a function that depends on the distance of a respective pixel from the gaze location. In other words, the farer away a pixel is located on the image from the gaze location, the lower its corresponding importance value is. Also when using a function of the region of interest to define the importance values of the importance matrix additional sensor data may be used.

For example, and is also described above, the threshold distance may depend on the speed of the car or in case of a sudden acceleration, importance values may be increased.

The importance matrix may have different levels of granularity. This means that the importance values of the importance matrix may vary on a pixel by pixel basis. Alternatively, the importance values of the importance matrix may also vary only between blocks of pixels (e.g., 2x2 pixels, 4x4 pixels, 8x8 pixels, 16x16 pixels, etc.). Fig. 4B illustrates the case where the importance values may vary on a pixel by pixel basis. As discussed above, there may be a one to one correspondence between the pixels of the image (e.g., image 200) and the importance values of the importance matrix (e.g., importance matrix 400A). In the illustrated example, each importance value of the importance matrix has a value (obtained, e.g., from table 1) that corresponds to the respective recognized object that is displayed by the pixel of the image that corresponds to the importance value of the importance matrix. In Fig. 4B the importance values are illustrated only for a small region 410 of the importance matrix 400A. In the illustrated region of Fig. 4B, importance values that correspond to pixels displaying the cyclist 205 of image 200 have value 1.0, importance values that correspond to pixels displaying the tree 206A of image 200 have value 0.2, and importance values that correspond to pixels displaying a region that is not the region of interest have value 0.1. In another example, illustrated in Fig. 4C the importance matrix does not vary on a pixel by pixel basis, but may rather vary only between blocks of pixels. In this case, the importance matrix may also have a block structure and the importance values corresponding to a block of pixels may all have the same value. For example, as illustrated in Fig. 4C the uppermost left block of the importance matrix 400B has importance values that are all 0 (because the corresponding pixels of image 200 are all displaying the object sky which may have a corresponding importance value of zero assigned, e.g., by table 1). Similarly, a block of importance values of the importance matrix that corresponds to pixels of image 200 displaying traffic sign 201 may have value 1. In this example, the situation may arise, where in one block of pixels multiple object categories may be present. Then, the corresponding importance value for the block may be, for example, the importance value of the object category that has assigned the maximum value among all present object categories in the block. For example, referring back to Fig. 4B the block / region 410 may then have the importance value 1 for all pixels in the block. In another example, an (weighted) average value could be used instead of the maximum value. It is worth mentioning, that also in the case of a importance matrix with block-structured importance values, still each pixel of the image (e.g., image 200) may have an associated importance value in the importance matrix. In other words, the importance matrix may still have the same size as the image, but the block-structure of the importance matrix allows reducing the file size of the importance matrix.

In addition to the above discussed examples where the importance matrix is determined from the image based on object recognition, distance values, temperature values, gaze location, and/or future trajectory, it is also possible to determine the importance matrix from the image by using a trained neural network model. In this case, the image could be used as input to the trained neural network model and the trained neural network model could output the importance matrix. Such a trained neural network model may be obtained by training the neural network model with a plurality of images and corresponding importance matrices (that are determined in advance). The neural network could then be trained to reproduce the known importance matrices for each corresponding input image. The importance matrices that are used for training the neural network model, may be obtained prior to the training either by determining the importance matrix according to any one of the above described examples or the importance matrices used for training may likewise be provided from elsewhere. For example, each image could be labeled by a user who assigns importance values to different regions of the importance matrix depending on what he considers as being important on the image. In one example, the trained neural network model may be transmitted to the vehicle 110 and the processor of the vehicle 110 may employ the trained neural network on an image that is recorded by camera 120 of the vehicle 110 in order to determine the importance matrix. Similar as discussed above, also an importance matrix that is determined by a trained neural network model can be combined with an importance matrix that is determined based on object recognition, distance values, temperature values, gaze location, and/or future trajectory as discussed above.

In one particular example (already mentioned above with regard to determining the region of interest based on distance values) a neural network model may be trained to determine a distance-value-based importance matrix (that may be determined as described above where the vehicle 110 may have the capability to measure the distance values for the pixels on the image, e.g., by a 3D camera, by a distance sensor, or by stereo imaging). This trained neural network model may then be transmitted to a vehicle that may not have the capability to measure the distance values. This may allow a vehicle that does not have the capability to measure the distance values to determine a distance-value-based importance matrix based on the received trained neural network model.

In another example, an importance matrix may also be received from another vehicle (such as other vehicle 130) or from the cloud environment 140. In this case, the received importance matrix may be mapped to the image that is recorded by the camera 120 of the vehicle 110. Such a mapping can be based on GPS coordinates, directional information of the camera and/or distance values of the vehicle 110 that is recording the image. In some examples, the received importance matrix may also include GPS coordinates, and directional information that may be used to map the received importance matrix to the recorded image. In some examples, receiving the importance matrix from another vehicle or the cloud environment may be useful when one is interested in objects that do not change their position frequently, such as traffic signs, buildings, trees, streets, etc. in this case, it may be useful to receive the importance matrix from a remote device (e.g., from the other vehicle 130 or from the cloud environment 140) instead of (or in addition to) determining the importance matrix by the vehicle itself.

As already outlined above, it is also possible to determine multiple importance matrices for the same image. In particular, it may be possible to determine a plurality of importance matrices based on any of the above described examples (i.e., based on object recognition, distance values, temperature values, gaze location, future trajectory, a trained neural network, and/or receiving the importance matrix from remote) and to combine these plurality of importance matrices. Each of the determined importance matrices may have the same size (i.e., width times height) that is the size of the image. In other words, each of the importance matrices may have the same number of importance values. This may allow combining the plurality of importance matrices by standard matrix operations. For example, importance matrices could be combined by multiplying the importance matrices, or by calculating a weighted average of the importance matrices, or by taking the maximum value for each importance value across the plurality of importance matrices, or by intersection (in case binary importance matrices are used with importance values of only 0 or 1) such as a logical AND or OR combination, or by thresholding (i.e., accepting an importance value if more than two importance values are above a threshold and using the mean importance value of the importance values that are above the threshold), or using statistical features (e.g., if two independent mechanisms for determining the region of interest detect a similar object - e.g., the object recognizer recognizes a human and a temperature-based region of interest is determined within the temperature region of 25 degrees Celsius to 40 degrees Celsius which may also indicate a human - use the mean importance value of they are corresponding importance matrices for this region of interest), or using the geometric mean value of the importance values across the plurality of importance matrices, or using the median value of the importance values across the plurality of importance matrices, or using other ways of combining the importance values. In the above, an importance value could be defined for each pixel of the image. Of course, for any of these examples, it may also be possible to define an importance value for each color value of each pixel. As discussed above, it may also be useful to transmit and/or receive an importance matrix. In this case, the above discussed block wise defined importance matrix may be beneficial, as a block wise importance matrix has a smaller file size and can thus be transmitted faster. In addition, it may be beneficial to adjust the number of different importance values to a bit format, e.g., on may use four different importance values (such as 0, 0.33, 0.66 and 1) so that the importance matrix can be stored in a two bit format.

As outlined above, the importance matrix (e.g., an importance matrix determined by only one of the above described examples, or an importance matrix that is obtained by combining multiple importance matrices as described above) is used to filter the image before the image is encoded by an encoder. Filtering the image before it is encoded may reduce the file size of the image after the image is encoded and may reduce processing costs for encoding the image. It is worth mentioning that the image may be typically used twice: on the one hand, the importance matrix may be determined based on the image, on the other hand, the image (i.e., the same image) is then filtered based on the importance matrix. In the present invention, the filtering is used to reduce the information content in regions of the image that are not the region of interest. This can be done, by filtering regions (i.e., pixels) on the image in accordance with they are corresponding importance values as defined in the importance matrix (that corresponds to the image). In one example, the filtering includes blurring regions of the image that are not the region of interest (e.g., pixels of the image that have an associated importance value that is smaller than 1). In particular, the importance value may be used to determine the degree of filtering (such as blurring) of the corresponding pixels. For example, the pixel value (e.g., the grey-scale or color value) of pixels having an importance value of 0 may be replaced with an average pixel value (such as the median or the arithmetic mean) of all pixels having a corresponding importance value of 0. On the other hand, all pixels having an importance value of 1 may not be filtered. In case the importance values of the importance matrix have values that are different from 0 or 1 (e.g., 0.33 or 0.2), these importance value can be used to regulate the degree of filtering. For example, blurring could be used to filter the image. One known example for blurring uses a kernel that has an adjustable kernel size. Typically, the larger the kernel size, the stronger the blurring. When using blurring for filtering the image (e.g., image 200), the importance value could be used to determine the kernel size, such that the smaller the importance value, the larger the kernel size for blurring the pixel values of the image corresponding to the importance values of the importance matrix.

Another known example for filtering images is filtering out high frequency pixel value fluctuations (e.g., using DCT). Typically, when reducing high frequencies in an image, the frequencies that are present in an image are determined and all determined frequencies that are above a frequency cut off are removed from the image (in other words, the pixel values of the image are re-calculated to generate an image without the high frequency pixel variations). When using frequency filtering for filtering the image (e.g., image 200), the cut off frequency for filtering a region of the image can depend on the importance values. For example, in case the importance value of a region is 1, then no frequencies are filtered out and in case the importance value of a region is smaller than 1, then the frequency cut off may scale with the importance value. In particular, the smaller an importance value is, the smaller the frequency cut off may be (i.e., the more frequencies are filtered out).

In some examples, the filtering step may also resemble the information reduction step of the subsequent encoder. For example, stronger quantization of higher frequency components according to a quantization table like employed in JPEG compression can be used as a filter - with different quantization degrees in regions of different importance values. Because many encoders typically use entropy encoders - often as ultimate step to generate a bitstream - the filtering may also be designed to optimally work with an entropy encoder by producing low entropy images or by allowing for easy B-frame and P-frame inference in image sequences, by reducing variation across images in regions of lower importance.

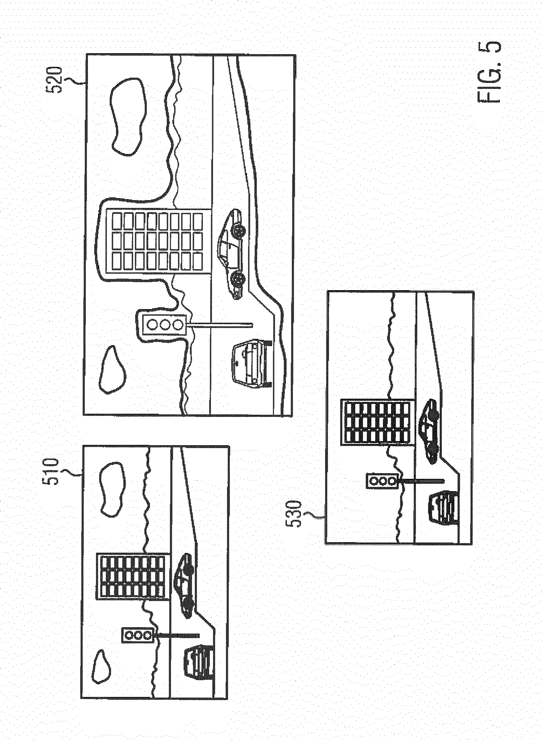

An example of filtering the image based on the importance matrix is illustrated in Fig. 5. an image 510 showing a typical scene that is recorded by a camera of a vehicle (e.g., vehicle 110) including a traffic light, street, trees, and other vehicles is displayed. In addition, an importance matrix 520 that corresponds to the image 510 is shown. As discussed above, each pixel in the image 510 may have a corresponding importance value in the importance matrix 520. The importance matrix may be determined based on any of the above discussed examples and/or any combination thereof. Further, a filtered image 530 is displayed that is generated from the image 510 by filtering the image 510 based on the importance matrix. The filtered image 530 may then be encoded by an encoder. By filtering the image before encoding the image, the encoder saves computational costs when encoding the image and the resulting encoded image has a smaller file size as compared to without filtering the image before encoding it. By applying filtering the image based on the importance matrix, the number of pixels of the image may remain the same. In other words, the size of the image (i.e., width times height) before filtering and after filtering remains the same.

As discussed above, after the image is filtered, the image is encoded by an encoder.

The encoder may be included in vehicle 110 and may be executable by the processor of the vehicle 110. The encoder may be any known encoder such as MJPEG, MJPEG 2000, H.261, MPEG-1, H.262/MPEG- 2, H263, MPEG-4 Part 2, H.264/MPEG-4 AVC/10, VP8, VP9, AV1, HEVC, IETF, RealVideo, Indeo, Indeo 2, OMS Video, On2 Technologies, RealMedia HD, Snow Wavelet Codec, Sorenson Video, Theora, VC-1, WMV, Guobiao Standards, Blackbird, Cinepak, Dirac, Firebird, Apple Intermediate Codec, Apple ProRes, Apple Pixlet, SMPTE, Grass Valley and NewTek. The encoder may also be a lossless codec such as Motion JPEG 2000 lossless, Dirac VC-2, AV1, Quick Time Animation, FFV1, MSU, Sheer Video, Ut Video Codec Suite, VP9, YULS, ZeroCodec and ZMBV. As discussed above, by filtering the image before encoding the image, the encoder (such as any of the above mentioned encoders) may need less processing steps to encode the image. In some examples, the filtering method (e.g., average value, blurring or frequency cut-off) for the image may be chosen dependent on the encoder used. In particular, a particular filtering method may lead to a higher reduction in processing costs when encoding the image and/or a higher reduction of the file size of the encoded image. This can be tested by applying the different filtering methods for an encoder and comparing the computation time for the encoding needed for the different filtering methods and/or the resulting file sizes of the encoded images when using the different filtering methods. Likewise, using an importance matrix for filtering the image that has a particular structure (such as a block structure as described above) may lead to increased efficiency when encoding the image or to an increased compressibility of the encoded image. For example, MPEG encoders (such as the ones listed above) typically analyze blocks of pixels (such as 16x16 pixels) when encoding an image so that filtering the image with a block-structured importance matrix may lead to improved efficiency. The above described filtering based on region of interest/importance matrix may be performed by a standalone application that may provide the filtered image to the encoder or the filtering may be performed as a pre-processing step by the encoder before the encoding of the filtered image. In both cases, the filtering may be performed as a pre-processing that is not part of the actual encoding so that no modification of the decoder is needed.

After the image is encoded, the image may be stored on the memory of the vehicle 110, the image may be transmitted to another vehicle (such as other vehicle 130) or to the cloud environment 140, and/or the image may be transmitted to a autonomous driving system of the vehicle 110. As discussed above, by filtering the image before encoding the image, the encoded image may have a smaller file size as compared to directly encoding the image without filtering beforehand.

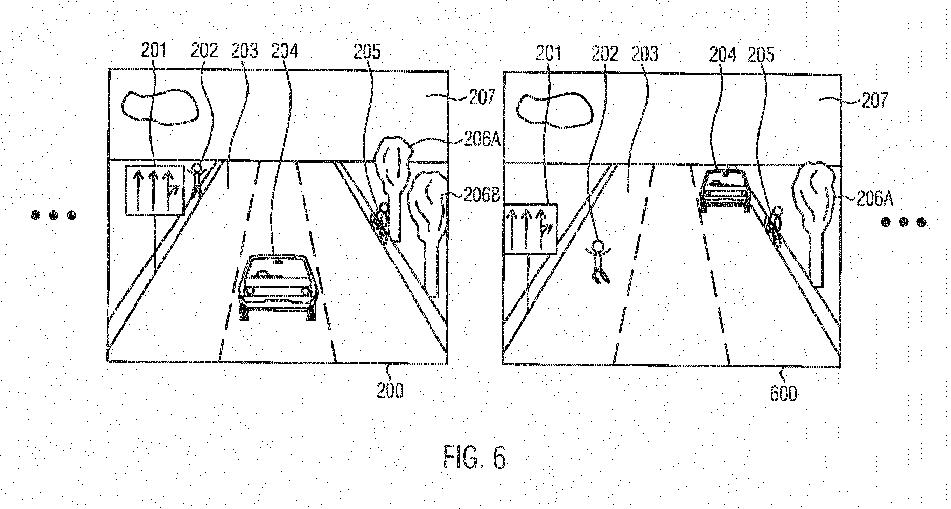

The above examples of the present invention have been described with reference to a (single) image for which the regions of interest/importance matrix is determined and which is filtered accordingly. According to the present invention, the image is included in a sequence of images (such as a video stream) recorded by the same recording device (e.g., camera 120 of vehicle 110). In this case, a region of interest/importance matrix may be determined for each of the images in the sequence and each of the images may be filtered based on the region of interest/importance matrix as detailed above. This scenario is illustrated in Fig. 6, where image 200 is followed by a subsequent image 600. Of course, many more images can be included in the sequence.

In case the image is included in a sequence of images, an additional example for determining an importance matrix exists. In particular, an importance matrix that has been determined for a previous image in the sequence may be used to determine the importance matrix of the current image. This may be helpful, as in many cases objects that are present on a previous image may also be present on a current image, as exemplarily shown in figure 6, where image 600 includes traffic sign 201, pedestrian 202, street 203, car 204, cyclist 205, tree 206A and sky 207. This means, that the importance matrix of the previous image (e.g., image 200 in the example of Fig. 6) already includes importance values for objects that are also present on the current image (e.g., image 600 in the example of Fig. 6). In this example, an object may be tracked across several images so that the object of a previous image can be detected in the current image. In one example, motion detection can be used in order to predict a region on the current image that displays an object that is also displayed on a region of the previous image. The importance matrix determined based on a previous image may also be combined with any of the above discussed importance matrices determined for the same image as detailed above. In some examples, even multiple importance matrices of respective multiple previous images may be used (e.g., from the last two or from the last five images). In yet another example, motion detection can be used to determine a velocity vector to a region (or even to each pixel) on the image (such as image 200). In this case, the region of interest (or the importance matrix) may be determined based on the velocity vector of a region (i.e., the pixels) on the image. For example, all regions that have a velocity vector which has an absolute value that is larger than a threshold value may be determined to be the region of interest or a high importance value could be assigned to the region (i.e., pixels) with a velocity vector that has an absolute value that is larger than the threshold value (e.g., if one is interested in fast moving objects on the image). Of course, other examples are possible (e.g., detecting slow objects). It is worth mentioning that the velocity vector obtained from motion detection may only resemble the velocity of the region (pixels) between subsequent images and may therefore not resemble the real physical velocity of the object that is recorded on the image. However, it may also possible to infer the real physical velocity/speed of the object (or a relative velocity/speed between the camera and the object) from comparison of two or more images in the sequence of images.

According to the present invention, a global importance value is assigned to the image. For example, some images in a sequence of images may be more important than others. Imagine that the sequence of images is recorded by a camera of a vehicle that is stuck in a traffic jam. In this case, many images may be highly similar, as only little changes may happen in front of the camera. In such cases, the global importance value may be low for images that are highly similar. Similarly, in other scenarios the images recorded by the camera may change rapidly. To this end, a global importance value is assigned which may additionally be used for filtering the images. The global importance value for the image is a single value (such as a value between 0 and 1, where 1 may be important and 0 may be not important) that is combined with the importance matrix for the image (e.g., by multiplying the importance matrix with the global importance where you). The image is then filtered based on an importance matrix that is scaled with the global importance value in the same manner as detailed above. In one example, the global importance value for a current image is lowered when no changes are present in the current image as compared to its previous image and increased when there are changes. In another example, the global importance value for a current image may be determined based on the change between the importance matrix of the previous image and the importance matrix of the current image. According to the present invention, the global importance value depends on additional sensor data, such as data from an accelerometer of the vehicle so that the global importance may be high in case of sudden acceleration.

The above discussed filtering of the image based on the importance matrix prior to encoding the image may be used in various example applications:
In a remote driving application the encoded images (recorded by the camera of the vehicle and filtered before being encoded) may be transmitted from the vehicle to a remote driving system, where a human or nonhuman driver may steer the vehicle. In an insurance and police application, upon a crash or a safety critical event (e.g., detected by the sensors of the vehicle) a sequence of encoded images may be streamed from the vehicle to a remote database as footage of the event. In an algorithm training and testing application, the images may be used to create a database of scenes that can be used to improve the navigation of autonomously driving vehicles or may solve problems in unforeseen scenarios after rollout. In an update of interactive panoramas of street scenes application, changes in the real world may be detected and remote maps may be updated accordingly, together with panoramas of street scenes. In a see-through application, if one vehicles few is blocked by a vehicle in front of it, the later can send a sequence of images to the first. A human or nonhuman driver can then see through the vehicle that is blocking the sight. In a communal planning application, image transmission among multiple vehicles can help to find the optimal solution of a navigation problem where many vehicles are involved. In a surveillance application, license plate or person recognition may run on a remote server, based on images streamed from vehicles. In one example, the driver at the remote driving system could use a GUI to mark a region (i.e., pixels) on the image or could zoom into a region of the image thereby assigning a high importance value (e.g., an importance value of 1) to this region (e.g., in order to obtain a higher level of details in this region). The information of the region that was marked or zoomed into may be transmitted from the remote driving system to the vehicle, where the high importance value is applied to this region.

In applications, where a sequence of image may be transmitted (e.g., in a remote driving application, a surveillance application, or a see-through application), the analytics, that may decide what may be the most important content of an image (e.g., using any one of the above described examples for determining the region of interest and/or the importance matrix) may need to run fast and may need to use as little power as possible. This goal may be achieved by using a hierarchy of complexity of the detection algorithm. In general, an algorithm for solving a more difficult/complex task (like license plate extraction) may be more complex than another algorithm for solving a more general task (like general object recognition). Therefore, performing the algorithm for solving the general task before the algorithm for solving the difficult task may be advantageous. For example, objects may have typically edges in common, so a general object recognition algorithm may (in a first step) compute a score of objectness of a region of the image (e.g., by performing object recognition as described above). In the example of license plate recognition, the license plate recognition may only be switched on (in a third step), once a car is recognized and a car recognition algorithm may only be switched on (in a second step) if an object is recognized by the general object recognition (which may be performed as the first step).

By defining this hierarchy, not only computational processing costs may be decreased, but also the accuracy of the more difficult/complex task (e.g., license plate recognition) may be improved. In the above discussed case of license plate recognition, the information about where the license plates are located in a given image may then again be used to determine (in a next step, e.g., a fourth step) the region of interest and/or the importance matrix and for filtering (e.g., blurring) all regions on the image that are not displaying license plates. The information about the location of the license plate may then (in a next step, e.g. a fifth step) be transmitted and a remote system may recognize the symbols or text on the unfiltered (or only moderately filtered) license plate part of the image. In this case, the remote system may still receive filtered information (e.g., filtered in accordance with the importance matrix) about the license plate's surrounding. This hierarchy (that may include the above described steps) of algorithms that may lead from computationally simple, general tasks to computationally more expensive, difficult/complex tasks may allow increasing accuracy while decreasing computational costs. In this case, more difficult/complex algorithms may only be switched on, if a more general algorithm may have made a detection. In other words, only in case a general algorithm (such as a general object recognizer) may have made a detection (e.g., the detection of an object on the image), more complex algorithms (such as car recognition and/or license plate recognition) may be performed and only then the image may be filtered based on the region of interest or the importance matrix and encoded (as described above). For example, based on the image and/or on further sensor data of the vehicle, the processor of the vehicle may determine whether transmission of a sequence of images (that are subsequent to the image) may be triggered or not and/or whether the image may be stored. Then, in case transmission of the sequence of images (or storing of the image) is triggered, the above-described algorithms may be performed in accordance with the hierarchy (e.g., the above-described five steps) in order to optimally filter the images based on the importance matrix (and/or the global importance value) before encoding the image.

Then in a next step, the filtered and encoded image and/or the importance matrix of the image may be transmitted to a remote system (such as cloud environment 140 or another vehicle 130) or to another unit on the vehicle 110 itself such as a sensor fusion unit of vehicle 110. The sensor fusion unit may be adapted to receive the importance matrix of the image (and/or the filtered and encoded image) and to further process and/or analyze the importance matrix of the image and/or the filtered and encoded image. In addition, the sensor fusion unit may decide based on the importance matrix (and/or the filtered and encoded image) whether additional data (e.g., images from a different camera or data from other sensors of the vehicle) may need to be acquired in order to make a decision.

In yet other applications, an HD map of street scenes may be generated by a remote device. In this case, the remote device may build the HD map of street scenes that are generated by one or many vehicles and one may be interested in objects/scenes that change frequently (e.g., to keep the HD map updated). Then, it may be beneficial to only transmit varying regions on the image captured by the one or many vehicles to the remote device.

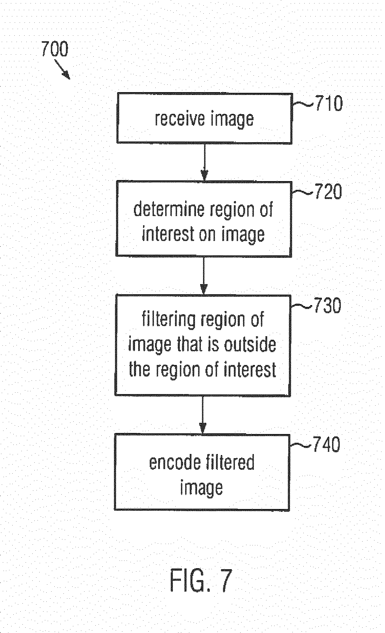

Fig. 7 illustrates a flow diagram for a method 700 of filtering an image (e.g., image 200) before the image is encoded in accordance with the above described examples of the present invention. In a first step, the image is received 710. The image is received by a processor of vehicle 110. The image is recorded by a camera 120 of the vehicle 110. Next, a region of interest may be determined on the image 720. Determining the region of interest on the image can be done based on object recognition, distance values, temperature values, case location, future trajectory and/or any combination thereof. The region of interest is defined by an importance matrix that comprises a plurality of importance values. The importance matrix comprises an importance value for each pixel of the image, whereas regions of interest may have an importance value of 1 and regions that are not the region of interest may have an importance value of 0. As detailed above, also different importance values, i.e. more than 0 and 1 can be used. Then, the region (i.e., the pixels) of the image that is outside the region of interest are filtered 730 in order to reduce the information content of the image. This filtering is performed in accordance with the importance values of the importance matrix. In this case, one or more regions (i.e., pixels) of the image that do not have an importance value of 1 are filtered and the degree of the filtering (e.g., blurring or frequency cut off) may depend on the importance value. Then, the filtered image is encoded 740. Optionally, the encoded image may then be stored on a memory of the vehicle 110, transmitted to a remote device (e.g., another vehicle 130 or cloud environment 140), or to an autonomous driving system of the vehicle.

## Claims

1. A method (700) comprising:
recording, by a camera (120) of a vehicle (110), an image (200; 510) having a plurality of pixels;
receiving (710), by a processor of the vehicle, the image (200; 510), wherein the image is included in a sequence of images, wherein a global importance value is assigned to the image;
determining (720), by the processor of the vehicle, a region of interest (301A; 301B) within the image, wherein the region of interest is defined by an importance matrix (400;
400A; 400B), wherein each of the plurality of pixels of the image has a corresponding importance value of the importance matrix;
prior to encoding the image, filtering (730), by the processor of the vehicle, the image to generate a filtered image (300A; 300B; 530) with reduced information content,
wherein the filtering comprises reducing the information content of the image by filtering pixels (302A; 302B) of the image outside the region of interest,
wherein the pixels of the image outside the region of interest are filtered based on a combination of the importance values of the importance matrix and the global importance value,
wherein the global importance value depends on additional sensor data, and
wherein the additional sensor data comprises data from an accelerometer, a break and/or a speed of the vehicle; and
encoding (740), by the processor of the vehicle, the filtered image by an encoder.

2. The method (700) of claim 1, wherein the method further comprises at least one of:
transmitting the encoded image to one or more of another vehicle (130) or a cloud environment (140);
providing the encoded image to an autonomous driving system of the vehicle; and
storing the encoded image in a memory of the vehicle.

3. The method (700) of any one of claims 1 to 2, wherein the region of interest (301A; 301B) is determined by at least one of:
recognizing an object (201) on the image and determining the region of interest based on the recognized object;
obtaining distance values for the image and determining the region of interest based on the distance values;
obtaining temperature values for the image and determining the region of interest based on the temperature values;
obtaining a gaze location of a user for the image and determining the region of interest based on the gaze location of the user;
determining a future trajectory and determining the region of interest based on the future trajectory; and
determining a velocity for one or more pixels of the plurality of pixels and determining the region of interest based on the velocity.

4. The method (700) of claim 1, wherein the image and the importance matrix have the same size, or wherein the importance matrix is mapped to fit the size of the image.

5. The method (700) of claim 1 or 4, wherein the importance matrix (400; 400A; 400B) is determined by applying a trained neural network to the image.

6. The method (700) of claim 1 or 4, wherein the importance matrix (400; 400A; 400B) is received from another vehicle (130) or a cloud environment (140).

7. The method of any one of claims 1 or 4 to 6, wherein the importance matrix is a combined importance matrix that is generated by combining a plurality of importance matrices, and wherein filtering the captured image is based on the combined importance matrix.

8. The method of any one of claims 1 to 7,
wherein the region of interest of the image is obtained based on a region of interest of a previous image, wherein the previous image is included in the sequence of images, and wherein the previous image is previous to the image in the sequence.

9. The method of any one of claims 4 to 8, wherein the importance matrix of the image is transmitted to at least one of another vehicle (130), a cloud environment (140) and a sensor fusion unit of the vehicle (110).

10. A system for providing images with reduced information content captured by a camera, the system being adapted to:
record, by a camera (120) of a vehicle (110), an image (200; 510) having a plurality of pixels;
receive (710), by a processor of the vehicle, the image (200; 510), wherein the image is included in a sequence of images, wherein a global importance value is assigned to the image;
determine (720), by a processor of the vehicle, a region of interest (301A; 301B) within the image, wherein the region of interest is defined by an importance matrix (400; 400A;
400B), wherein each of the plurality of pixels of the image has a corresponding importance value of the importance matrix;
prior to encoding, filter (730), by the processor of the vehicle, the image to generate a filtered image (300A; 300B; 530) with reduced information content,
wherein the filtering comprises reducing the information content of the image by filtering pixels (302A; 302B) of the image outside the region of interest,
wherein the pixels of the image outside the region of interest are filtered based on a combination of the importance values of the importance matrix and the global importance value,
wherein the global importance value depends on additional sensor data, and
wherein the additional sensor data comprises data from an accelerometer, a break and/or a speed of the vehicle; and
encode (740), by the processor of the vehicle, the filtered image by an encoder.

11. The system of claim 10, wherein the system is further adapted to perform at least one of:
transmit the encoded image to one or more of another vehicle (130) or a cloud environment (140);
provide the encoded image to an autonomous driving system of the vehicle; and
store the encoded image in a memory of the vehicle.

12. The system of any one of claims 10 or 11, wherein the system is further adapted to determine the region of interest (301A; 301B) by at least one of:
recognizing an object (201) on the image and determining the region of interest based on the recognized object;
obtaining distance values for the image and determining the region of interest based on the distance values;
obtaining temperature values for the image and determining the region of interest based on the temperature values;
obtaining a gaze location of a user for the image and determining the region of interest based on the gaze location of the user;
determining a future trajectory and determining the region of interest based on the future trajectory; and
determining a velocity for one or more pixels of the plurality of pixels and determining the region of interest based on the velocity.

13. The system of any one of claims 10 to 12,
wherein the image and the importance matrix have the same size, or wherein the importance matrix is mapped to fit the size of the image; and/or
wherein the importance matrix (400; 400A; 400B) is determined by applying a trained neural network to the image; and/or
wherein the importance matrix (400; 400A; 400B) is received from another vehicle (130) or a cloud environment (140).

14. The system of any one of claims 10 to 13, wherein the importance matrix is a combined importance matrix that is generated by combining a plurality of importance matrices, and wherein filtering the captured image is based on the combined importance matrix; and/or
wherein the region of interest of the image is obtained based on a region of interest of a previous image, wherein the previous image is included in the sequence of images, and wherein the previous image is previous to the image in the sequence.

15. A computer-readable medium comprising computer-readable instructions, that, when executed by a processor, cause the processor to perform a method according to one of claims 1 to 9.

## Patentansprüche

1. Verfahren (700), das umfasst:
Aufzeichnen eines Bildes (200; 510) mit einer Vielzahl von Pixeln durch eine Kamera (120) eines Fahrzeugs (110);
Empfangen (710) des Bildes (200; 510) durch einen Prozessor des Fahrzeugs, wobei das Bild in einer Folge von Bildern enthalten ist und dem Bild ein globaler Wichtigkeits-Wert zugewiesen wird;
Bestimmen (720) eines Region of Interest (301A; 301B) innerhalb des Bildes durch den Prozessor des Fahrzeugs, wobei der Region of Interest durch eine Wichtigkeits-Matrix (400; 400A; 400B) definiert ist und jedes der Vielzahl von Pixeln des Bildes einen entsprechenden Wichtigkeits-Wert der Wichtigkeits-Matrix hat;
Filtern (730) des Bildes durch den Prozessor des Fahrzeugs, um ein gefiltertes Bild (300A; 300B; 530) mit reduziertem Informationsgehalt zu erzeugen, vor Codieren des Bildes,
wobei das Filtern Reduzieren des Informationsgehaltes des Bildes durch Filtern von Pixeln (302A; 302B) des Bildes außerhalb des Region of Interest umfasst,
die Pixel des Bildes außerhalb des Region of Interest auf Basis einer Kombination aus den Wichtigkeits-Werten der Wichtigkeits-Matrix und dem globalen Wichtigkeits-Wert gefiltert werden,
der globale Wichtigkeits-Wert von zusätzlichen Sensor-Daten abhängig ist, und
die zusätzlichen Sensor-Daten Daten von einem Beschleunigungsmesser, einer Bremse und/oder eine Geschwindigkeit des Fahrzeugs umfassen; sowie
Codieren (740) des gefilterten Bildes durch den Prozessor des Fahrzeugs mittels eines Codierers.

2. Verfahren (700) nach Anspruch 1, wobei das Verfahren des Weiteren umfasst:
Senden des codierten Bildes zu einem anderen Fahrzeug (130) oder/und einer Cloud-Umgebung (140);
Bereitstellen des codierten Bildes für ein autonomes Fahrsystem des Fahrzeugs; oder/und
Speichern des codierten Bildes in einem Speicher des Fahrzeugs.

3. Verfahren (700) nach einem der Ansprüche 1 bis 2, wobei der Region of Interest (301A; 301B) bestimmt wird mittels:
Erkennen eines Objektes (201) auf dem Bild und Bestimmen des Region of Interest auf Basis des erkannten Objektes;
Ermitteln von Abstands-Werten für das Bild und Bestimmen des Region of Interest auf Basis der Abstands-Werte;
Ermitteln von Temperatur-Werten für das Bild und Bestimmen des Region of Interest auf Basis der Temperatur-Werte;
Ermitteln einer Blickposition eines Benutzers für das Bild und Bestimmen des Region of Interest auf Basis der Blickposition des Benutzers;
Bestimmen einer zukünftigen Bewegungsbahn und Bestimmen des Region of Interest auf Basis der zukünftigen Bewegungsbahn; sowie
Bestimmen einer Geschwindigkeit für ein oder mehrere Pixel der Vielzahl von Pixeln und Bestimmen des Region of Interest auf Basis der Geschwindigkeit.

4. Verfahren (700) nach Anspruch 1, wobei das Bild und die Wichtigkeits-Matrix die gleiche Größe haben oder wobei die Wichtigkeits-Matrix so abgebildet wird, dass sie zu der Größe des Bildes passt.

5. Verfahren (700) nach Anspruch 1 oder 4, wobei die Wichtigkeits-Matrix (400; 400A; 400B) durch Anwenden eines trainierten neuronalen Netzes auf das Bild bestimmt wird.

6. Verfahren (700) nach Anspruch 1 oder 4, wobei die Wichtigkeits-Matrix (400; 400A; 400B) von einem anderen Fahrzeug (130) oder einer Cloud-Umgebung (140) empfangen wird.

7. Verfahren nach einem der Ansprüche 1 oder 4 bis 6, wobei die Wichtigkeits-Matrix eine kombinierte Wichtigkeits-Matrix ist, die durch Kombinieren einer Vielzahl von Wichtigkeits-Matrizen erzeugt wird, und Filtern des aufgenommenen Bildes auf der kombinierten Wichtigkeits-Matrix basiert.

8. Verfahren nach einem der Ansprüche 1 bis 7,
wobei der Region of Interest des Bildes auf Basis eines Region of Interest eines vorhergehenden Bildes ermittelt wird, das vorhergehende Bild in der Folge von Bildern enthalten ist und das vorhergehende Bild dem Bild in der Folge vorhergeht.

9. Verfahren nach einem der Ansprüche 4 bis 8, wobei die Wichtigkeits-Matrix des Bildes zu einem anderen Fahrzeug (130), einer Cloud-Umgebung (140) oder/und einer Sensorfusions-Einheit des Fahrzeugs (110) gesendet wird.

10. System zum Bereitstellen von einer Kamera aufgenommener Bilder mit reduziertem Informationsgehalt, wobei das System eingerichtet ist zum:
Aufzeichnen eines Bildes (200; 510) mit einer Vielzahl von Pixeln durch eine Kamera (120) eines Fahrzeugs (110);
Empfangen (710) des Bildes (200; 510) durch einen Prozessor des Fahrzeugs, wobei das Bild in einer Folge von Bildern enthalten ist und dem Bild ein globaler Wichtigkeits-Wert zugewiesen wird;
Bestimmen (720) eines Region of Interest (301A; 301B) innerhalb des Bildes durch den Prozessor des Fahrzeugs, wobei der Region of Interest durch eine Wichtigkeits-Matrix (400; 400A; 400B) definiert ist und jedes der Vielzahl von Pixeln des Bildes einen entsprechenden Wichtigkeits-Wert der Wichtigkeits-Matrix hat;
Filtern (730) des Bildes durch den Prozessor des Fahrzeugs, um ein gefiltertes Bild (300A; 300B; 530) mit reduziertem Informationsgehalt zu erzeugen, vor Codieren,
wobei das Filtern Reduzieren des Informationsgehaltes des Bildes durch Filtern von Pixeln (302A; 302B) des Bildes außerhalb des Region of Interest umfasst,
die Pixel des Bildes außerhalb des Region of Interest auf Basis einer Kombination aus den Wichtigkeits-Werten der Wichtigkeits-Matrix und dem globalen Wichtigkeits-Wert gefiltert werden,
der globale Wichtigkeits-Wert von zusätzlichen Sensor-Daten abhängig ist, und
die zusätzlichen Sensor-Daten Daten von einem Beschleunigungsmesser, einer Bremse und/oder eine Geschwindigkeit des Fahrzeugs umfassen; sowie
Codieren (740) des gefilterten Bildes durch den Prozessor des Fahrzeugs mittels eines Codierers.

11. System nach Anspruch 10, wobei das System des Weiteren so eingerichtet ist, dass es durchführt:
Senden des codierten Bildes zu einem anderen Fahrzeug (130) oder/und einer Cloud-Umgebung (140);
Bereitstellen des codierten Bildes für ein autonomes Fahrsystem des Fahrzeugs; oder/und
Speichern des codierten Bildes in einem Speicher des Fahrzeugs.

12. System nach einem der Ansprüche 10 oder 11, wobei das System des Weiteren so eingerichtet ist, dass es den Region of Interest (301 A; 301B) bestimmt mittels:
Erkennen eines Objektes (201) auf dem Bild und Bestimmen des Region of Interest auf Basis des erkannten Objektes;
Ermitteln von Abstands-Werten für das Bild und Bestimmen des Region of Interest auf Basis der Abstands-Werte;
Ermitteln von Temperatur-Werten für das Bild und Bestimmen des Region of Interest auf Basis der Temperatur-Werte;
Ermitteln einer Blickposition eines Benutzers für das Bild und Bestimmen des Region of Interest auf Basis der Blickposition des Benutzers;
Bestimmen einer zukünftigen Bewegungsbahn und Bestimmen des Region of Interest auf Basis der zukünftigen Bewegungsbahn; sowie
Bestimmen einer Geschwindigkeit für ein oder mehrere Pixel der Vielzahl von Pixeln und Bestimmen des Region of Interest auf Basis der Geschwindigkeit.

13. System nach einem der Ansprüche 10 bis 12,
wobei das Bild und die Wichtigkeits-Matrix die gleiche Größe haben oder die Wichtigkeits-Matrix so abgebildet wird, dass sie zu der Größe des Bildes passt; und/oder
die Wichtigkeits-Matrix (400; 400A; 400B) durch Anwenden eines trainierten neuronalen Netzes auf das Bild bestimmt wird; und/oder
die Wichtigkeits-Matrix (400; 400A; 400B) von einem anderen Fahrzeug (130) oder einer Cloud-Umgebung (140) empfangen wird.

14. System nach einem der Ansprüche 10 bis 13, wobei die Wichtigkeits-Matrix eine kombinierte Wichtigkeits-Matrix ist, die durch Kombinieren einer Vielzahl von Wichtigkeits-Matrizen erzeugt wird, und Filtern des aufgenommenen Bildes auf der kombinierten Wichtigkeits-Matrix basiert;
und/oder
der Region of Interest des Bildes auf Basis eines Region of Interest eines vorhergehenden Bildes ermittelt wird, das vorhergehende Bild in der Folge von Bildern enthalten ist und das vorhergehende Bild dem Bild in der Folge vorhergeht.

15. Computerlesbares Medium, das computerlesbare Anweisungen umfasst, die, wenn sie von einem Prozessor ausgeführt werden, den Prozessor veranlassen, ein Verfahren nach einem der Ansprüche 1 bis 9 durchzuführen.

## Revendications

1. Procédé (700) comprenant :
l'enregistrement, par une caméra (120) d'un véhicule (110), d'une image (200 ; 510) ayant une pluralité de pixels ;
la réception (710), par un processeur du véhicule, de l'image (200 ; 510), dans lequel l'image est incluse dans une séquence d'images, dans lequel une valeur d'importance globale est attribuée à l'image ;
la détermination (720), par le processeur du véhicule, d'une région d'intérêt (301A ; 301B) dans l'image, dans lequel la région d'intérêt est définie par une matrice d'importance (400 ; 400A ; 400B), dans lequel chacun de la pluralité de pixels de l'image a une valeur d'importance correspondante de la matrice d'importance ;
préalablement au codage de l'image, le filtrage (730), par le processeur du véhicule, de l'image pour générer une image filtrée (300A ; 300B ; 530) à contenu informatif réduit,
dans lequel le filtrage comprend la réduction du contenu informatif de l'image en filtrant des pixels (302A ; 302B) de l'image à l'extérieur de la région d'intérêt,
dans lequel les pixels de l'image à l'extérieur de la région d'intérêt sont filtrés sur la base d'une combinaison des valeurs d'importance de la matrice d'importance et de la valeur d'importance globale,
dans lequel la valeur d'importance globale dépend de données de capteur supplémentaires, et
dans lequel les données de capteur supplémentaires comprennent des données provenant d'un accéléromètre, d'un frein et/ou d'une vitesse du véhicule ; et
le codage (740), par le processeur du véhicule, de l'image filtrée par un codeur.

2. Procédé (700) de la revendication 1, dans lequel le procédé comprend en outre au moins l'un parmi :
la transmission de l'image codée à un ou plusieurs parmi un autre véhicule (130) ou un environnement infonuagique (140) ;
la fourniture de l'image codée à un système de conduite autonome du véhicule ; et
le stockage de l'image codée dans une mémoire du véhicule.

3. Procédé (700) de l'une quelconque des revendications 1 et 2, dans lequel la région d'intérêt (301A ; 301B) est déterminée par au moins l'une parmi :
la reconnaissance d'un objet (201) sur l'image et la détermination de la région d'intérêt sur la base de l'objet reconnu ;
l'obtention de valeurs de distance pour l'image et la détermination de la région d'intérêt sur la base des valeurs de distance ;
l'obtention de valeurs de température pour l'image et la détermination de la région d'intérêt sur la base des valeurs de température ;
l'obtention d'un emplacement du regard d'un utilisateur pour l'image et la détermination de la région d'intérêt sur la base de l'emplacement du regard de l'utilisateur ;
la détermination d'une trajectoire future et la détermination de la région d'intérêt sur la base de la trajectoire future ; et
la détermination d'une vitesse pour un ou plusieurs pixels de la pluralité de pixels et la détermination de la région d'intérêt sur la base de la vitesse.

4. Procédé (700) de la revendication 1, dans lequel l'image et la matrice d'importance ont la même taille, ou dans lequel la matrice d'importance est mappée pour s'ajuster à la taille de l'image.

5. Procédé (700) de la revendication 1 ou 4, dans lequel la matrice d'importance (400 ; 400A ; 400B) est déterminée en appliquant un réseau neuronal formé à l'image.

6. Procédé (700) de la revendication 1 ou 4, dans lequel la matrice d'importance (400; 400A ; 400B) est reçue d'un autre véhicule (130) ou d'un environnement infonuagique (140).

7. Procédé de l'une quelconque des revendications 1 ou 4 à 6, dans lequel la matrice d'importance est une matrice d'importance combinée qui est générée en combinant une pluralité de matrices d'importance, et dans lequel le filtrage de l'image capturée est basé sur la matrice d'importance combinée.

8. Procédé de l'une quelconque des revendications 1 à 7,
dans lequel la région d'intérêt de l'image est obtenue sur la base d'une région d'intérêt d'une image précédente, dans lequel l'image précédente est incluse dans la séquence d'images, et dans lequel l'image précédente est antérieure à l'image dans la séquence.

9. Procédé de l'une quelconque des revendications 4 à 8, dans lequel la matrice d'importance de l'image est transmise à au moins l'un parmi un autre véhicule (130), un environnement infonuagique (140) et une unité de fusion de capteurs du véhicule (110).

10. Système de fourniture d'images à contenu informatif réduit capturées par une caméra, le système étant adapté pour :
enregistrer, par une caméra (120) d'un véhicule (110), une image (200 ; 510) ayant une pluralité de pixels ;
recevoir (710), par un processeur du véhicule, l'image (200 ; 510), dans lequel l'image est incluse dans une séquence d'images, dans lequel une valeur d'importance globale est attribuée à l'image ;
déterminer (720), par un processeur du véhicule, une région d'intérêt (301A ; 301B) dans l'image, dans lequel la région d'intérêt est définie par une matrice d'importance (400 ; 400A ; 400B), dans lequel chacun de la pluralité de pixels de l'image a une valeur d'importance correspondante de la matrice d'importance ;
préalablement au codage, filtrer (730), par le processeur du véhicule, l'image pour générer une image filtrée (300A ; 300B ; 530) à contenu informatif réduit,
dans lequel le filtrage comprend la réduction du contenu informatif de l'image en filtrant des pixels (302A ; 302B) de l'image à l'extérieur de la région d'intérêt,
dans lequel les pixels de l'image à l'extérieur de la région d'intérêt sont filtrés sur la base d'une combinaison des valeurs d'importance de la matrice d'importance et de la valeur d'importance globale,
dans lequel la valeur d'importance globale dépend de données de capteur supplémentaires, et
dans lequel les données de capteur supplémentaires comprennent des données provenant d'un accéléromètre, d'un frein et/ou d'une vitesse du véhicule ; et
coder (740), par le processeur du véhicule, l'image filtrée par un codeur.

11. Système de la revendication 10, dans lequel le système est en outre adapté pour effectuer au moins l'un parmi :
la transmission de l'image codée à un ou plusieurs parmi un autre véhicule (130) ou un environnement infonuagique (140) ;
la fourniture de l'image codée à un système de conduite autonome du véhicule ; et
le stockage de l'image codée dans une mémoire du véhicule.

12. Système de l'une quelconque des revendications 10 ou 11, dans lequel le système est en outre adapté pour déterminer la région d'intérêt (301A ; 301B) par au moins l'une parmi :
la reconnaissance d'un objet (201) sur l'image et la détermination de la région d'intérêt sur la base de l'objet reconnu ;
l'obtention de valeurs de distance pour l'image et la détermination de la région d'intérêt sur la base des valeurs de distance ;
l'obtention de valeurs de température pour l'image et la détermination de la région d'intérêt sur la base des valeurs de température ;
l'obtention d'un emplacement du regard d'un utilisateur pour l'image et la détermination de la région d'intérêt sur la base de l'emplacement du regard de l'utilisateur ;
la détermination d'une trajectoire future et la détermination de la région d'intérêt sur la base de la trajectoire future ; et
la détermination d'une vitesse pour un ou plusieurs pixels de la pluralité de pixels et la détermination de la région d'intérêt sur la base de la vitesse.

13. Système de l'une quelconque des revendications 10 à 12,
dans lequel l'image et la matrice d'importance ont la même taille, ou dans lequel la matrice d'importance est mappée pour s'ajuster à la taille de l'image ; et/ou
dans lequel la matrice d'importance (400 ; 400A ; 400B) est déterminée en appliquant un réseau neuronal formé à l'image ; et/ou
dans lequel la matrice d'importance (400 ; 400A ; 400B) est reçue d'un autre véhicule (130) ou d'un environnement infonuagique (140).

14. Système de l'une quelconque des revendications 10 à 13, dans lequel la matrice d'importance est une matrice d'importance combinée qui est générée en combinant une pluralité de matrices d'importance, et dans lequel le filtrage de l'image capturée est basé sur la matrice d'importance combinée ; et/ou
dans lequel la région d'intérêt de l'image est obtenue sur la base d'une région d'intérêt d'une image précédente, dans lequel l'image précédente est incluse dans la séquence d'images, et dans lequel l'image précédente est antérieure à l'image dans la séquence.

15. Support lisible par ordinateur comprenant des instructions lisibles par ordinateur, qui, lorsqu'elles sont exécutées par un processeur, amènent le processeur à effectuer un procédé selon l'une des revendications 1 à 9.
